# EUROPEAN PATENT SPECIFICATION

(11) **EP 3 594 921 B1**
(45) Date of publication and mention of the grant of the patent: **09.07.2025**
(21) Application number: 18465546.2
(22) Date of filing: 09.07.2018
(51) Int. Cl.: G08G 1/01, G01S 13/93, G08G 1/16

(54) **OVERTAKING ASSISTANCE SYSTEM FOR A VEHICLE**
ÜBERHOLASSISTENZSYSTEM FÜR EIN FAHRZEUG
SYSTÈME D'ASSISTANCE AU DÉPASSEMENT POUR VÉHICULE

(43) Date of publication of application: 15.01.2020
(73) Proprietor: Continental Autonomous Mobility Germany GmbH, 85057 Ingolstadt (DE)
(72) Inventor: Onica, Dan, 307220 Giroc (RO)
(74) Representative: Continental Corporation

(56) References cited:
- EP-A1- 2 942 765
- US-A- 5 521 579
- US-A1- 2017 225 686
- US-A1- 2018 046 191
- STEFAN HABENICHT ET AL: "A maneuver-based lane change assistance system", INTELLIGENT VEHICLES SYMPOSIUM (IV), 2011 IEEE, IEEE, 5 June 2011 (2011-06-05), pages 375 - 380, XP031998927, ISBN: 978-1-4577-0890-9, DOI: 10.1109/IVS.2011.5940417

## Description

The invention relates in general to the field of advanced driver assistance systems (ADAS) for vehicle. Particularly, the invention relates to an overtaking assistance system for permitting or prohibiting an overtaking maneuver of a host vehicle on a road with at least a lane allowing oncoming traffic and overtaking traffic. Furthermore, the invention relates to a method and a program element for permitting or prohibiting an overtaking maneuver of a host vehicle on a road with at least a lane allowing oncoming traffic and overtaking traffic, and a computer-readable medium.

Overtaking is often a risky maneuver on national or rural two-lane roads with one lane per direction, causing a significant accident rate. The collision or accident rate may be pronounced when a vehicle shares the same preceding lane with several vehicles ahead at different speeds or velocities and then overtakes by temporally sharing the oncoming lane with a vehicle that comes in opposite direction.

In modern vehicle, advanced driver assistance systems (ADAS) have been implemented to assist or instruct a driver to perform a driving maneuver. Overtaking assistance information may be collected either from rear view cameras or radars to avoid collisions into blind spot or with traffic coming from behind, or from front looking cameras or radars to avoid crashing into oncoming or preceding traffic.

Documents US5521579A (BERNHARD WERNER [DE])), EP2942765A1(HONDA RES INST EUROPE GMBH [DE]) disclose examples of systems and methodsfor assisting a driver in lane changing maneuvers. Document US2018/046191A1 (KELLER MARTIN [DE] ET AL) discloses an example of driver's assistance system and method for determining a trajectory to be followed by a host vehicle based on driving dynamics of the host vehicle and its surroundings.

It is an objective of the invention to provide an improved overtaking assistance system.

The problem is solved by the subject matter according to the independent claims. The dependent claims, the following description and the drawings show embodiments of the invention.

According to a first aspect, an overtaking assistance system according to independent claim 1 is provided for permitting and/or prohibiting an overtaking maneuver of a host vehicle on a road with at least an oncoming lane allowing oncoming traffic and overtaking traffic. The overtaking assistance system comprises a front sensor system, which is configured to acquire sensor data of a first vehicle and a second vehicle and an overtaking decision making system, which is connected to sensors of the front sensor system.

For example, the host vehicle, in which the overtaking assistance system is implemented, travels in a preceding lane of a two-lane road at the very end with a plurality of preceding vehicles and an oncoming vehicle ahead. Among the plurality of preceding vehicles ahead travel the first vehicle not directly in front, the second vehicle between the host vehicle and the first vehicle, and a fourth vehicle in front of the first vehicle. When the first vehicle performs an overtaking, the host vehicle may also have an opportunity to overtake if the overtaking assistance system permits the overtaking maneuver based on its analysis.

The front sensor system is configured to measure a lateral speed between the first vehicle and the second vehicle. The lateral speed can be measured as a relative speed between the first vehicle, which is one of the preceding vehicles except the vehicle directly in front of the host vehicle and may perform overtaking, and the second vehicle among the preceding vehicles, which travels directly behind the first vehicle. The lateral speed may also be described as a transversal or drift speed, e.g., associated with lane change of the first vehicle during the overtaking. It is to be noted that a vector of a lateral speed is perpendicular to a vector of a lateral speed, which is measured along the lane and in parallel to the road boundaries.

Furthermore, the front sensor system is configured to measure a first longitudinal distance between the first vehicle and the host vehicle, and a second longitudinal distance between a third vehicle and the host vehicle. The longitudinal distance can be measured as a distance between two vehicles along the road lane or in parallel to the road boundaries. The first longitudinal distance indicates the distance between the host vehicle and the first vehicle, which travels in the same direction among the preceding traffic. The second longitudinal distance indicates the distance between the host vehicle and the third vehicle, which travels in the opposite direction and is the closest vehicle among the oncoming traffic to the host vehicle.

The overtaking decision making system is configured to permit or prohibit the overtaking maneuver based on the lateral speed and the first and second longitudinal distances. The lateral speed and the longitudinal distances are essential sensor data, which can be acquired by many sensors implemented the front sensor system and analyzed by the overtaking decision making system. A fusion of the sensor data acquired by various sensors may increase the plausibility and reliability of the overtaking assistance system for a vehicle.

Thus, an overtaking assistance system is provided, which uses additional information and provides add-on functionality, based on which a host vehicle is permitted or prohibited to perform an overtaking maneuver with enhanced safety and reduced risk. Therefore, extra information is used to evaluate the risk of overtaking maneuvers on rural roads and to assist or instruct the driver to perform a safe overtaking. For example, when one of several preceding vehicles performs an overtaking, a space or gap can possibly be generated in the preceding traffic, allowing the host vehicle to travel in and to return to the preceding lane after performing an overtaking.

According to a first embodiment, the front sensor system of the overtaking assistance system comprises a radar, which is configured to measure sensor data to determine the first longitudinal distance between the first vehicle and the host vehicle and the second longitudinal distance between the third vehicle and the host vehicle.

It may be advantageous to use the radar for longitudinal measurements, as the use of the radar may results in a better longitudinal resolution compared to the use of a camera system, which is more precise in detecting or revealing lateral information of preceding or oncoming vehicles. The radar of the front sensor system first detects longitudinal positions of the first preceding vehicle and the third oncoming vehicle, respectively, relative to the host vehicle. The longitudinal distance is subsequently determined or estimated based on the acquired sensor data of the longitudinal positions.

According to a second embodiment, the front sensor system comprises a front camera system, which is configured to measure sensor data to estimate the lateral speed between the first vehicle and the second vehicle from the acquired sensor data.

The front camera system may detect lateral positions of preceding and oncoming vehicles, respectively. The lateral positions of the preceding vehicles, such as the first vehicle and the second vehicle, may be determined by detecting the lateral positions of taillights. The lateral position of the oncoming vehicles, such as the third vehicle, may be determined by detecting the lateral positions of headlights. A lateral speed between the first vehicle and the second vehicle can therefore be estimated by analyzing the relative lateral position change, or the first lateral distance, between the first vehicle and the second vehicle over time.

Moreover, the front camera system is able to detect lane width or/and road boundaries. For example, when one of several preceding vehicles performs an overtaking, the oncoming lane is then occupied by the overtaking vehicle, leaving space in the preceding lane to allow the host vehicle to travel in or return to after performing an overtaking. The lane width can be measured at the longitudinal position of the first vehicle, if the lane is visible there. Otherwise, the lane width can be measured in a near range, at a longitudinal position close to the first vehicle, assuming that the lane width of a country road does not vary dramatically over some distance. The additional information about lane width or road boundaries may contribute as an additional confident factor, which is considered with many other confident factors, to a more reliable overtaking assistance system for a safer overtaking.

According to the invention, the front sensor system is configured to detect a turn signal of the first vehicle indicating overtaking. By the overtaking, the turn signal is activated.

According to the invention, the overtaking assistance system further comprises an overtaking identification system.

A plurality of sensors with various functionalities are integrated or implemented in the overtaking identification system. With these sensors, the overtaking identification system is configured to detect the driving characteristics of the host vehicle, including vehicle dynamics, driver activity or/and driving path prediction. With intention to overcome, the host vehicle travels slightly towards or into the oncoming lane with activated turn signal, resulting in changes in the driving characteristics. Based on the detected driving characteristics, the overtaking identification system is configured to identify the overtaking intention of a driver.

The overtaking decision making system may comprise a situation analysis unit, configured to process different analysis depending on various overtaking situations, and an overtaking indication unit, configured to output a signal indicating whether to permit or prohibit the overtaking maneuver. It is also possible to implement a predefined portfolio of analysis processes in the overtaking decision making system.

According to the invention, the overtaking decision making system is configured to analyze the sensor data by means of the front sensor system and the overtaking identification system, and to output a signal to a human-machine-interface or a central circuit, which permits or prohibits the driver to overtake.

The human-machine-interface (HMI) is configured to assist the driver in communicating or interacting with the host vehicle. For example, the driver can receive the output signal visually or acoustically from the overtaking indication unit or the overtaking decision making system, which permits or prohibits the driver to overtake. The HMI may be designed in forms of a heads-up display (HUD), an augmented reality (AR), driver information console (DIC), a see-through display or a smart-glass display etc.

According to the invention, the overtaking decision making system is configured to permit the host vehicle to overtake, if the lateral speed between the first vehicle and the second vehicle, v_{C-B,lat}, is above a first threshold, and if the first longitudinal distance, d_{C-A}, is less than the second longitudinal distance, d_{E-A}.

The first threshold, v_{t,lat}, is defined as a minimal lateral speed between the two preceding vehicles, the first vehicle and the second vehicle directly behind the first preceding vehicle. When the first condition, that the lateral speed between the first and the second vehicles is larger than the first threshold (v_{C-B,lat} > v_{t,lat}), is satisfied, it can be concluded that the first vehicle travels laterally away from the second vehicle and a lane change of the first vehicle from the preceding lane into the oncoming lane takes place. Therefore, the overtaking of the first vehicle can be identified, indicating that the host vehicle may be permitted to overtake, as a space or gap can possibly be generated to allow the host vehicle to travel in after its overtaking.

Additionally, to permit the vehicle to overtake, it is also important to make sure that the first vehicle, which is identified for its overtaking based on the measured first lateral speed, is closer to the host vehicle than the oncoming third vehicle. In other words, there must be no oncoming vehicles present between the host vehicle and the preceding vehicle during the overtaking. Therefore, the overtaking assistance system only permits the overtaking maneuver of the host vehicle, if the second condition, that the first longitudinal distance d_{C-A} is less than the second longitudinal distance d_{E-A} (d_{E-A} > d_{C-A}), can be satisfied. A collision or an accident of the host vehicle and the oncoming third vehicle can then be avoided.

According to the invention, the overtaking decision making system is configured to permit the host vehicle to overtake, if the turn signal of the first vehicle is activated, indicating an overtaking of the first vehicle.

It is to be noted that the activated turn signal of the first vehicle alone may not be sufficient to identify the overtaking of the first vehicle, since it is not rare that the turn signal is operated by mistakes. Therefore, the detection of the turn signal state for determining the overtaking of the preceding first vehicle can only be considered as an additional confidence factor, which can be added on to improve the plausibility of the overtaking assistance system. According to another embodiment, the front sensor system of the overtaking assistance system is configured to detect a first lateral distance between the first vehicle and the second vehicle. The overtaking decision making system is then configured to permit the host vehicle to overtake, if the first lateral distance between the first vehicle and the second vehicle, d_{C-B,lat}, is above a lateral distance threshold or a second threshold, d_{t,lat}. The second threshold may directly be estimated from the identified lane width as previously described, preferably be equal to the lane width.

It is important to make sure that the first vehicle, which is identified for its overtaking, is occupying the oncoming lane and generating a space for the host vehicle to travel in after its overtaking.

According to the invention, the overtaking decision making system is configured to permit the host vehicle to overtake, if no oncoming third vehicle is detected on the oncoming lane by the front sensor system.

Without oncoming traffic, there will be no risk to crash into a vehicle from the opposite direction using the oncoming lane during the overtaking.

According to the invention, the front sensor system is configured to detect a third longitudinal distance between a fourth vehicle and the second vehicle, and a longitudinal speed between the fourth vehicle and the second vehicle.

In the preceding traffic, the fourth vehicle is the vehicle directly in front of the first vehicle, which performs the overtaking. The third longitudinal distance, d_{D-B}, can be estimated by measured longitudinal positions of the fourth vehicle and the second vehicle, e.g., by using the radar of the front sensor system. The longitudinal speed between the fourth and the second vehicles, v_{D-B}, can be estimated by measuring the relative longitudinal distance change between the fourth and the second vehicles over time.

The overtaking decision making system configured to permit the vehicle to overtake, if the third longitudinal distance is above a third threshold, and if the longitudinal speed is above a fourth threshold.

The third threshold, dₜ, is defined as the minimal longitudinal distance for permitting the host vehicle to return to the previous preceding lane after the overtaking once the overtaking of the first vehicle can be identified. The minimal longitudinal distance or the third threshold may vary due to an individual length of the host vehicle, so that the host vehicle is able to travel in the space, which is generated by the overtaking of the first vehicle in the preceding traffic. Hence, the overtaking assistance system may permit the host vehicle to overtake, if the fourth condition, that the third longitudinal distance is greater than the third threshold (d_{D-B} > dₜ), is satisfied.

Furthermore, the fourth threshold, vₜ, is defined as the minimal longitudinal speed between the fourth vehicle and the second vehicle. Preferably, the fourth threshold is greater than or equal to zero (vt ≥ 0), indicating that the longitudinal speed of the fourth vehicle is greater than that of the second vehicle and the distance between the fourth and the second vehicles increases or at least remains. As such, the space, in which the host vehicle is able to travel in after the overtaking, can be extended or at least remained. In other words, if the fifth condition, that the longitudinal speed between the fourth and the second vehicles is greater than the fourth threshold (v_{D-B} > vₜ), is satisfied, the overtaking assistance system permits the host vehicle to overtake.

In the scenarios that the overtaking of the host vehicle is prohibited due to any unsatisfied first to fifth conditions, the overtaking assistance system is configured to instruct the driver, e.g. by generating an alert through the HMI.

According to a second aspect, a vehicle is provided, wherein the vehicle comprises the overtaking assistance system described above and, in more detail, in the following. Regarding further effects, advantages and beneficial embodiments of the vehicle according to the second aspect of the present invention, it is referred to the above explanations regarding the overtaking assistance system according to the first aspect of the present invention.

According to the invention, a method in accordance with claim 7 is provided for permitting or prohibiting an overtaking maneuver of a host vehicle on a road with at least a lane allowing oncoming traffic and overtaking traffic. The method comprises the following steps: first, detecting or measuring a lateral speed between a first vehicle and a second vehicle by means of a front sensor system; subsequently, detecting or measuring a first longitudinal distance between the first vehicle and the host vehicle, and a second longitudinal distance between a third vehicle and the host vehicle by means of the front sensor system; finally, permitting or prohibiting the overtaking maneuver based on the lateral speed and the first and second longitudinal distances.

According to the invention, the overtaking maneuver will be permitted by an implemented overtaking assistance system, which is described above in the first aspect and the following embodiments, if the first condition, that the lateral speed between the first and the second vehicles is greater than the first threshold (v_{C-B,lat} > v_{t,lat}), and the second condition, that the first longitudinal distance d_{C-A} is less than the second longitudinal distance d_{E-A} (d_{E-A} > d_{C-A}), are satisfied.

According to the invention, a program element being a computer program product in accordance with claim 8 is provided for permitting or prohibiting an overtaking maneuver of a host vehicle on a road with at least a lane allowing oncoming traffic and overtaking traffic. The program element, when being executed by a processor of a vehicle, is adapted to instruct the vehicle to perform the following method steps: first, detecting or measuring a lateral speed between a first vehicle and a second vehicle by means of a front sensor system; subsequently, detecting or measuring a first longitudinal distance between the first vehicle and the host vehicle, and a second longitudinal distance between a third vehicle and the host vehicle by means of the front sensor system; finally, permitting or prohibiting the overtaking maneuver based on the lateral speed and the first and second longitudinal distances.

The overtaking maneuver of the host vehicle can be permitted, if the first condition, that the lateral speed between the first and the second vehicles is larger than the first threshold (v_{C-B,lat} > v_{t,lat}), and the second condition, that the first longitudinal distance d_{C-A} is less than the second longitudinal distance d_{E-A} (d_{E-A} > d_{C-A}), are satisfied.

According to the invention, a computer-readable medium is provided, in which the computer program as described above in the previous aspect of the invention is stored.

These and other aspects will be apparent from and elucidated with reference to the embodiments as per the drawings described hereinafter.
- Fig. 1: shows schematically a block diagram illustrating an overtaking assistance system for permitting or prohibiting an overtaking maneuver of a host vehicle;
- Fig. 2: shows schematically a diagram illustrating a positional relationship between a host vehicle and a plurality of preceding vehicles including first to fourth vehicles and an overcoming vehicle;
- Fig. 3: shows schematically a flow chart illustrating a method for permitting or prohibiting an overtaking maneuver of a host vehicle.

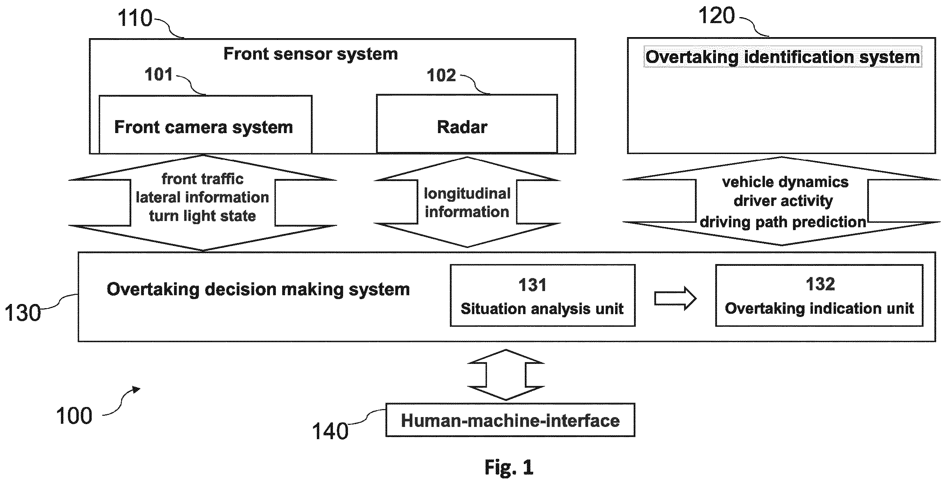

Fig. 1 shows schematically a block diagram illustrating an overtaking assistance system 100 for permitting or prohibiting an overtaking maneuver of a host vehicle 200 on a road with at least a lane allowing oncoming traffic and overtaking traffic. The overtaking assistance system 100 comprises a front sensor system 110 an overtaking identification system 120, an overtaking decision making system 130 and a human-machine-interface 140.

The front sensor system 110 is configured to acquire sensor data of the vehicles ahead in the preceding traffic and the oncoming traffic, e.g. the first to fourth vehicles 201, 202, 203, 204. The front sensor system 110 comprises a front camera system 101 that is configured to measure sensor data such as lateral positions, lateral distances, lane width or road boundaries, to estimate the lateral speed between vehicles, e.g. between the first vehicle 201 and the second vehicle 202 from the acquired sensor data, or to detect turn light states of the preceding or oncoming vehicles. The front sensor system 110 further comprises a radar 102 that is configured to measure sensor data, such as longitudinal positions, to estimate longitudinal distances between vehicles, e.g. the first longitudinal distance between the first vehicle 201 and the host vehicle 200 and the second longitudinal distance between the third vehicle 203 and the host vehicle 200. The fusion or integration of the front camera system 101 and the radar 102 may expand functionality portfolio of the front sensor system with better plausibility.

The overtaking identification system 120 is configured to detect the driving characteristics of the host vehicle 200, such as vehicle dynamic, driver activity or/and driving path prediction. The overtaking intention of the driver of the host vehicle 200 can be identified based on the acquired driving characteristics.

The sensor data of the front sensor system 110 and the overtaking identification system 120 can be further output to and analyzed by the overtaking decision making system 130, which is configured to permit or prohibit the host vehicle to overtake based on the sensor data, e.g. the lateral speed between the first vehicle 201 and the second vehicle 202 and the first and second longitudinal distances. The analysis can be performed by the situation analysis unit 131, which is configured to conduct different analysis processes depending on various overtaking situations. Predefined analysis processes can be implemented in the situation analysis unit 131. Based on the results of the analysis, the overtaking indication unit 132 of the overtaking decision making system 130 is configured to output a signal to the human-machine-interface 140 which instructs the driver of the host vehicle 200 and permits or prohibits the overtaking maneuver.

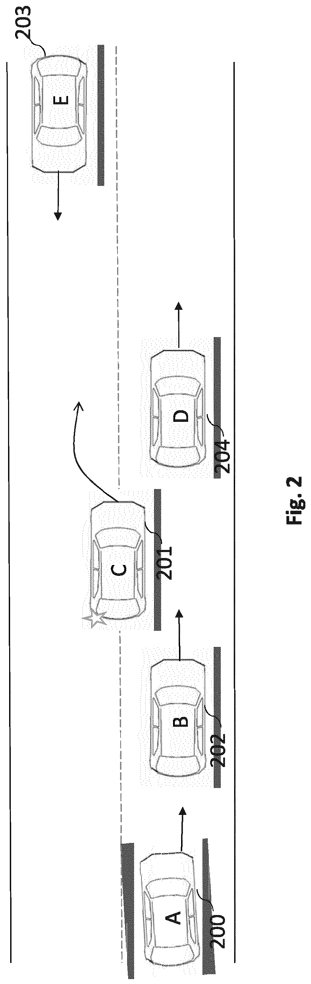

Fig. 2 shows schematically a diagram illustrating a positional relationship between a host vehicle 200 and a plurality of preceding vehicles including first to fourth vehicles 201, 202, 204 and an overcoming vehicle 203.

The figure shows that the host vehicle 200, in which an overtaking assistance system 100 is implemented, travels on a preceding lane on a two-lane country or rural road with a plurality of preceding vehicles 201, 202, 204 and an oncoming vehicle 203 ahead. The road is designed for both directions and each one of the two lanes is designed to allow both overtaking and preceding traffic. The host vehicle 200 travels at the very end in the preceding lane, associated with a plurality of preceding vehicles ahead, including the first vehicle 201 not directly in front, the second vehicle 202 between the host vehicle 200 and the first vehicle 201, and the fourth vehicle 204 in front of the first vehicle 201. When performing an overtaking, the first vehicle 201 travels towards or partially into the oncoming lane with the third vehicle 203, and may partially further share the same preceding lane with the other preceding vehicles 200, 202, 204.

With intention to overtake, the host vehicle 200 travels slightly towards or into the lane for the oncoming traffic. The intention of the overtaking can be identified by the overtaking identification systems 120. The front sensor system 110, 130 of the host vehicle 200 is configured to acquire sensor data of the preceding vehicles 201, 202, 204 and the oncoming vehicle 203 by means of the front camera system 101 and the radar 102.

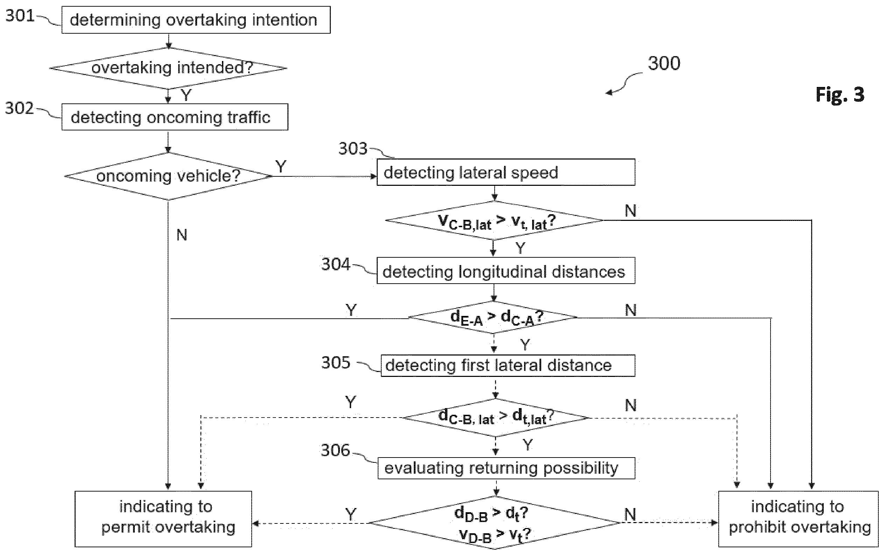

By performing the overtaking, the first vehicle 201 travels into the oncoming lane at a lateral speed v_{C-B,lat} with turn signal indicating the overtaking. A first longitudinal distance between the first vehicle 201 and the host vehicle 200, d_{C-A}, and a second longitudinal distance between the third vehicle 203 and the host vehicle 200, d_{E-A}, can be measured by the front sensor system 110, 130 of the host vehicle 200. The fourth vehicle 204 and the second vehicle 204 further travel in the preceding lane with a third longitudinal distance d_{D-B} and a relative speed between them, a longitudinal speed v_{D-B}. Fig. 3 shows schematically a flow chart illustrating a method for permitting or prohibiting an overtaking maneuver of a host vehicle 200. The method is be carried out by an overtaking assistance system 100 that can be implemented in the host vehicle 200 or executed by a computer program. With reference to previous Fig. 2, the host vehicle 200 travels along the preceding lane with a plurality of preceding vehicles and may perform an overtaking when one of the preceding vehicles overtakes.

The methods starts at step 301 where overtaking intention of a host vehicle 200 is determined by an overtaking identification system 120. If the overtaking intention is identified based on detected driving characteristics, the process advances to step 302, where oncoming traffic is detected by means of a front sensor system 110 of the overcoming assistance system 100. The front sensor system 110 determines whether there is an oncoming vehicle present in the oncoming lane. If no oncoming vehicle is detected, an overtaking decision making system 130 of the overcoming assistance system 100 may permit the host vehicle 200 to overtake; if an oncoming vehicle, the third vehicle 203, is detected in the oncoming lane, more sensor data are required by using the front sensor system 110 to determine whether the host vehicle 200 can be permitted or prohibited to perform the overtaking.

The process proceeds then to step 303 to detect first a lateral speed, v_{C-B,lat}, between the first vehicle 201 and the second vehicle 202. At step 303, it is to be determined whether the first condition, that the lateral speed is above the first threshold (v_{C-B,lat} > v_{t,l}), can be satisfied. If the first condition is not satisfied or the lateral speed is not above the first threshold (v_{C-B,lat} ≤ v_{t,l}), the overtaking decision making system 130 prohibits the host vehicle 200 to overtake, as the overtaking of the preceding third vehicle 203 cannot be identified. If the first condition is satisfied or the lateral speed is above the first threshold (v_{C-B,lat} > v_{t,l}), it is determined that the first vehicle 201 performs the overtaking and a space or gap may be generated to allow the host vehicle 200 to travel in after the overtaking. The process proceeds further to step 304.

At step 304, it is to be determined whether the second condition, that a first longitudinal distance, d_{C-A}, between the first vehicle 201 and the host vehicle 200 is less than a second longitudinal distance, d_{E-A}, between the third vehicle 203 and the host vehicle 200 (d_{E-A} > d_{C-A}), can be satisfied. If the second condition is not satisfied or the first longitudinal distance is greater than the second longitudinal distance (d_{E-A} < d_{C-A}), the overtaking decision making system 130 prohibits the host vehicle 200 to overtake, as the third oncoming vehicle 203 is closer to the host vehicle compared to the first vehicle 201 and crashing into the oncoming vehicle is highly possible to occur when the host vehicle 200 performs the overtaking. If the second condition is satisfied or the first longitudinal distance is less than the second longitudinal distance (d_{E-A} > d_{C-A}), it is determined and further confirmed that the first vehicle 201 performs an overtaking and the space may be generated to allow the host vehicle 200 to travel in after the overtaking. Therefore, the overtaking decision making system 130 may permit the host vehicle 200 to overcome.

In order to improve the plausibility and reliability of the overtaking assistance system 100, the front sensor 110 may additionally detect the preceding traffic at step 305 to determine whether the third condition, that the first lateral distance between the first vehicle 201 and the second vehicle 202, d_{C-B, lat}, is greater than the lateral distance threshold or the second threshold (d_{C-B, lat} > d_{t,lat}), preferably greater than the lane width, can be satisfied. If the third condition is not satisfied or the first lateral is not above the second threshold (d_{C-B,lat} ≤ d_{t,lat}), the overtaking decision making system 130 may prohibit the host vehicle 200 to overtake, as the confident factor indicating the overtaking maneuver of the first vehicle 201 may not be sufficient and the overtaking of the host vehicle 200 may be risky. If the third condition is satisfied or the first lateral distance is above the second threshold (d_{C-B,lat} > d_{t,lat}), preferably above the lane width, the first vehicle may be identified for its overtaking by occupying the oncoming lane and leaving a space for the host vehicle 200 to travel in after its overtaking. Therefore, the overtaking assistance system 130 may permit the overtaking maneuver of the host vehicle 200.

Additionally, in order to further improve the plausibility and reliability of the overtaking assistance system 100, the front sensor system 110 may evaluate the returning possibility back to the preceding lane after the overtaking. At step 306, it is to be determined whether the fourth condition, that the third longitudinal distance is greater than the third threshold (d_{D-B} > dt), and the fifth condition, that the longitudinal speed between the fourth and the second vehicles is greater than the fourth threshold (v_{D-B} > vₜ), can be satisfied. If either the fourth condition or the fifth condition is not satisfied (d_{D-B} ≤ dt or v_{D-B} ≤ vₜ), the overtaking decision making system 130 may prohibit the host vehicle 200 to overtake, assuming that the space generated by the overtaking of the first vehicle 201 is not sufficient to allow the host vehicle 201 to travel in after the overtaking. If the fourth condition and the fifth condition are satisfied(d_{D-B} > dt and v_{D-B} > vₜ), the overtaking decision making system 130 may permit the host vehicle 200 to overtake, as the space between the fourth vehicle 204 and the second vehicle 202 will then be sufficient to allow the host vehicle 200 to travel in after its overtaking.

## Claims

1. An overtaking assistance system (100) adapted to be located on-board a host vehicle for permitting or prohibiting an overtaking maneuver of said host vehicle (200) on a road with at least an oncoming lane allowing oncoming traffic and overtaking traffic, the system comprising:
a front sensor system (110), comprising sensors (101, 102)and configured to acquire sensor data of a first vehicle (201), a second vehicle (202), a third vehicle (203) and a fourth vehicle (204);
wherein the second vehicle (202) travels in front of the host vehicle (200),the first vehicle (201) travels in front of the second vehicle (202) and the fourth vehicle (204) travels in front of the first vehicle (201), and the third vehicle (203) is an oncoming vehicle which travels in the opposite direction to the host vehicle and is the closest vehicle among the oncoming traffic to the host vehicle;;
an overtaking identification system (120) wherein the overtaking identification system (120) comprises a plurality of sensors and using said sensors, is configured to identify an overtaking intention of a driver of the host vehicle based on the detection of the driving characteristics of the host vehicle and when the overtaking intention of the host vehicle is determined, oncoming traffic on the oncoming lane is detected by means of the front sensor system, wherein the driving characteristics comprise vehicle dynamics, driver activity or/and driving path prediction;
an overtaking decision making system (130), which is connected to the sensors (101, 102) of the front sensor system (110) and
a human-machine-interface (140);
wherein the overtaking decision making system (130) is configured to analyze the sensor data by means of the front sensor system (110) and the overtaking identification system (120), and to output a signal to the human-machine-interface (140) which permits or prohibits the driver of the host vehicle to overtake,
wherein the front sensor system (110) is configured to measure a first lateral speed between the first vehicle (201) and the second vehicle (202);
wherein the front sensor system (110) is configured to measure a first longitudinal distance between the first vehicle (201) and the host vehicle (200), and a second longitudinal distance between a third vehicle (203) and the host vehicle (200);
wherein the front sensor system (110, 130) is configured to detect a third longitudinal distance between a fourth vehicle (204) and the second vehicle (202), and a second longitudinal speed between the fourth vehicle (204) and the second vehicle (202);wherein the front sensor system (110) is configured to detect a turn signal of the first vehicle (201) indicating overtaking,
wherein the overtaking decision making system (130) is configured to permit the host vehicle (200) to overtake, if the lateral speed between the first vehicle (201) and the second vehicle (202) is above a first threshold, and if the first longitudinal distance is less than the second longitudinal distance and if the third longitudinal distance is above a third threshold, and if the second longitudinal speed between the fourth vehicle (204) is above a fourth threshold and if the turn signal of the first vehicle (201) indicates an overtaking of the first vehicle (201), as a space or gap can possibly be generated to allow the host vehicle to travel in after its overtaking;

2. The overtaking assistance system (100) according to claim 1,
wherein the front sensor system (110, 130) comprises a radar (102), configured to measure sensor data to determine the first longitudinal distance between the first vehicle (201) and the host vehicle (200) and the second longitudinal distance between the third vehicle (203) and the host vehicle (200).

3. The overtaking assistance system (100) according to claim 1 or 2,
wherein the front sensor system (110, 130) comprises a front camera system (101), configured to measure sensor data to estimate the lateral speed between the first vehicle (201) and the second vehicle (202) from the acquired sensor data.

4. The overtaking assistance system (100) according to one of the preceding claims,
wherein the overtaking decision making system (130) is configured to permit the host vehicle (200) to overtake, if the turn signal of the first vehicle (201) indicates an overtaking of the first vehicle (201).

5. The overtaking assistance system (100) according to one of the preceding claims,
wherein the front sensor system (110, 130) is configured to detect a first lateral distance between the first vehicle (201) and the second vehicle (202);
wherein the overtaking decision making system (130) is configured to permit the host vehicle (200) to overtake, if the first lateral distance is above a second threshold.

6. A vehicle (200) comprising an overtaking assistance system (100) according to one of the preceding claims.

7. A method (300) for permitting or prohibiting an overtaking maneuver of a host vehicle (200) on a road with at least an oncoming lane allowing oncoming traffic and overtaking traffic, the method (300) comprising the following steps of:
detecting (303), by means of a front sensor system (110, 130), a lateral speed between a first vehicle (201) and a second vehicle (202), wherein the second vehicle (202) travels in front of the host vehicle (200) and the first vehicle (201) travels in front of the second vehicle (202), further detecting ), a third vehicle (203) and a fourth vehicle (204), wherein the fourth vehicle (204) travels in front of the first vehicle (201) and wherein the third vehicle (203) is an oncoming vehicle;
detecting (304), by means of the front sensor system (110, 130), a first longitudinal distance between the first vehicle (201) and the host vehicle (200), and a second longitudinal distance between a third vehicle (203) and the host vehicle (200);
permitting or prohibiting the overtaking maneuver based on the lateral speed and the first and second longitudinal distances, wherein the overtaking decision making system (130) is configured to permit the host vehicle (200) to overtake, if the lateral speed between the first vehicle (201) and the second vehicle (202) is above a first threshold, and if the first longitudinal distance is less than the second longitudinal distance and
detecting by means of the front sensor system (110, 130) a turn signal of the first vehicle (201) indicating overtaking, detecting by means of a overtaking identification system (120) the driving characteristics of the host vehicle (200), which comprise vehicle dynamics, driver activity or/and driving path prediction;
identifying by means of the overtaking identification system (120) comprising a plurality of sensors and using said sensors, an overtaking intension of a driver based on the detection of the driving characteristics and when the overtaking intention of the host vehicle is determined, oncoming traffic on the oncoming lane is detected by means of the front sensor system;
analyzing by means of the overtaking decision making system (130) the sensor data by means of the front sensor system (110, 130) and the overtaking identification system (120), and outputting a signal to the human-machine-interface (140) or a central circuit which permits or prohibits the driver to overtake,
permitting by means of the overtaking decision making system (130) the host vehicle (200) to overtake, if no oncoming third vehicle (203) is detected by the front sensor system (101),
detecting by means of the front sensor system (110, 130) a third longitudinal distance between a fourth vehicle (204) and the second vehicle (202), and a longitudinal speed between the fourth vehicle (204) and the second vehicle (202);
permitting by means of the overtaking decision making system (130), which is is configured to permit overtaking, the host vehicle vehicle (200) tc overtake, if the third longitudinal distance is above a third threshold, and if the longitudinal speed is above a fourth threshold.

8. A computer program product for permitting or prohibiting an overtaking maneuver of a host vehicle (200) on a road with at least a lane allowing oncoming traffic and overtaking traffic, which, when being executed by a processor of a vehicle (200), is adapted to instruct the host vehicle (200) tc perform the method steps according to claim 7 including:
detecting, by means of a front sensor system (110, 130), a lateral speed between a first vehicle (201) and a second vehicle (202);
detecting, by means of the front sensor system (110, 130), a first longitudinal distance between the first vehicle (201) and the host vehicle (200), and a second longitudinal distance between a third vehicle (203) and the host vehicle (200);
permitting or prohibiting the overtaking maneuver based on the lateral speed and the first and second longitudinal distances.

9. A computer-readable medium, in which a computer program according to claim 8 is stored.

## Patentansprüche

1. Überholassistenzsystem (100), das dazu ausgebildet ist, an Bord eines Host-Fahrzeugs angeordnet zu werden, um ein Überholmanöver des Host-Fahrzeugs (200) auf einer Straße mit mindestens einer Gegenfahrbahn, die Gegenverkehr und Überholverkehr zulässt, zu erlauben oder zu untersagen, wobei das System aufweist:
ein Frontsensorsystem (110), das Sensoren (101, 102) aufweist und dazu ausgebildet ist, Sensordaten eines ersten Fahrzeugs (201), eines zweiten Fahrzeugs (202), eines dritten Fahrzeugs (203) und eines vierten Fahrzeugs (204) zu erfassen;
wobei das zweite Fahrzeug (202) vor dem Host-Fahrzeug (200) fährt, das erste Fahrzeug (201) vor dem zweiten Fahrzeug (202) fährt und das vierte Fahrzeug (204) vor dem ersten Fahrzeug (201) fährt und das dritte Fahrzeug (203) ein entgegenkommendes Fahrzeug ist, das in der entgegengesetzten Richtung zum Host-Fahrzeug fährt und das nächste Fahrzeug im Gegenverkehr zum Host-Fahrzeug ist;
ein Überholvorgang-Erkennungssystem (120), wobei das Überholvorgang-Erkennungssystem (120) eine Vielzahl von Sensoren aufweist und unter Verwendung der Sensoren dazu ausgebildet ist, eine Überholabsicht eines Fahrers des Host-Fahrzeugs basierend auf der Erfassung der Fahrcharakteristika des Host-Fahrzeugs zu identifizieren, und wenn die Überholabsicht des Host-Fahrzeugs bestimmt ist, wird Gegenverkehr auf der Gegenfahrbahn mittels des Frontsensorsystems erfasst, wobei die Fahrcharakteristika Fahrzeugdynamik, Fahreraktivität oder/und Fahrwegvorhersage umfassen;
ein Überholentscheidungssystem (130), das mit den Sensoren (101, 102) des Frontsensorsystems (110) verbunden ist, und
eine Mensch-Maschine-Schnittstelle (140);
wobei das Überholentscheidungssystem (130) dazu ausgebildet ist, die Sensordaten mittels des Frontsensorsystems (110) und des Überholvorgang-Erkennungssystems (120) zu analysieren und ein Signal an die Mensch-Maschine-Schnittstelle (140) auszugeben, das dem Fahrer des Host-Fahrzeugs das Überholen erlaubt oder untersagt,
wobei das Frontsensorsystem (110) dazu ausgebildet ist, eine erste seitliche Geschwindigkeit zwischen dem ersten Fahrzeug (201) und dem zweiten Fahrzeug (202) zu messen;
wobei das Frontsensorsystem (110) dazu ausgebildet ist, einen ersten Längsabstand zwischen dem ersten Fahrzeug (201) und dem Host-Fahrzeug (200) und einen zweiten Längsabstand zwischen einem dritten Fahrzeug (203) und dem Host-Fahrzeug (200) zu messen;
wobei das Frontsensorsystem (110, 130) dazu ausgebildet ist, einen dritten Längsabstand zwischen einem vierten Fahrzeug (204) und dem zweiten Fahrzeug (202) und eine zweite Längsgeschwindigkeit zwischen dem vierten Fahrzeug (204) und dem zweiten Fahrzeug (202) zu erfassen; wobei das Frontsensorsystem (110) dazu ausgebildet ist, ein Fahrtrichtungsanzeigesignal des ersten Fahrzeugs (201) zu erfassen, das ein Überholen anzeigt,
wobei das Überholentscheidungssystem (130) dazu ausgebildet ist, dem Host-Fahrzeug (200) das Überholen zu erlauben, wenn die seitliche Geschwindigkeit zwischen dem ersten Fahrzeug (201) und dem zweiten Fahrzeug (202) über einem ersten Schwellenwert liegt und wenn der erste Längsabstand kleiner ist als der zweite Längsabstand und wenn der dritte Längsabstand über einem dritten Schwellenwert liegt und wenn die zweite Längsgeschwindigkeit zwischen dem vierten Fahrzeug (204) über einem vierten Schwellenwert liegt und wenn das Fahrtrichtungsanzeigesignal des ersten Fahrzeugs (201) ein Überholen des ersten Fahrzeugs (201) anzeigt, da möglicherweise ein Raum oder eine Lücke erzeugt werden kann, in die das Host-Fahrzeug nach seinem Überholen einscheren kann.

2. Überholassistenzsystem (100) nach Anspruch 1,
wobei das Frontsensorsystem (110, 130) ein Radar (102) aufweist, das dazu ausgebildet ist, Sensordaten zu messen, um den ersten Längsabstand zwischen dem ersten Fahrzeug (201) und dem Host-Fahrzeug (200) und den zweiten Längsabstand zwischen dem dritten Fahrzeug (203) und dem Host-Fahrzeug (200) zu bestimmen.

3. Überholassistenzsystem (100) nach Anspruch 1 oder 2,
wobei das Frontsensorsystem (110, 130) ein Frontkamerasystem (101) aufweist, das dazu ausgebildet ist, Sensordaten zu messen, um die seitliche Geschwindigkeit zwischen dem ersten Fahrzeug (201) und dem zweiten Fahrzeug (202) anhand der erfassten Sensordaten zu schätzen.

4. Überholassistenzsystem (100) nach einem der vorhergehenden Ansprüche, wobei das Überholentscheidungssystem (130) dazu ausgebildet ist, dem Host-Fahrzeug (200) das Überholen zu erlauben, wenn das Fahrtrichtungsanzeigesignal des ersten Fahrzeugs (201) ein Überholen des ersten Fahrzeugs (201) anzeigt.

5. Überholassistenzsystem (100) nach einem der vorhergehenden Ansprüche, wobei das Frontsensorsystem (110, 130) dazu ausgebildet ist, eine erste seitliche Geschwindigkeit zwischen dem ersten Fahrzeug (201) und dem zweiten Fahrzeug (202) zu messen;
wobei das Überholentscheidungssystem (130) dazu ausgebildet ist, dem Host-Fahrzeug (200) das Überholen zu erlauben, wenn der erste seitliche Abstand über einem zweiten Schwellenwert liegt.

6. Fahrzeug (200), das ein Überholassistenzsystem (100) nach einem der vorhergehenden Ansprüche aufweist.

7. Verfahren (300) zum Erlauben oder Untersagen eines Überholmanövers eines Host-Fahrzeugs (200) auf einer Straße mit mindestens einer Gegenfahrbahn, die Gegenverkehr und Überholverkehr zulässt, wobei das Verfahren (300) die folgenden Schritte aufweist:
Erfassen (303), mittels eines Frontsensorsystems (110, 130), einer seitlichen Geschwindigkeit zwischen einem ersten Fahrzeug (201) und einem zweiten Fahrzeug (202), wobei das zweite Fahrzeug (202) vor dem Host-Fahrzeug (200) fährt und das erste Fahrzeug (201) vor dem zweiten Fahrzeug (202) fährt, ferner Erfassen) eines dritten Fahrzeugs (203) und eines vierten Fahrzeugs (204), wobei das vierte Fahrzeug (204) vor dem ersten Fahrzeug (201) fährt und wobei das dritte Fahrzeug (203) ein entgegenkommendes Fahrzeug ist;
Erfassen (304), mittels des Frontsensorsystems (110, 130), eines ersten Längsabstands zwischen dem ersten Fahrzeug (201) und dem Host-Fahrzeug (200) und eines zweiten Längsabstands zwischen einem dritten Fahrzeug (203) und dem Host-Fahrzeug (200);
Erlauben oder Untersagen des Überholmanövers basierend auf der seitlichen Geschwindigkeit und dem ersten und dem zweiten Längsabstand, wobei das Überholentscheidungssystem (130) dazu ausgebildet ist, dem Host-Fahrzeug (200) das Überholen zu erlauben, wenn die seitliche Geschwindigkeit zwischen dem ersten Fahrzeug (201) und dem zweiten Fahrzeug (202) über einem ersten Schwellenwert liegt und wenn der erste Längsabstand kleiner ist als der zweite Längsabstand, und
Erfassen, mittels des Frontsensorsystems (110, 130), eines Fahrtrichtungsanzeigesignals des ersten Fahrzeugs (201), das ein Überholen anzeigt, Erfassen, mittels eines Überholvorgang-Erkennungssystems (120), der Fahreigenschaften des Host-Fahrzeugs (200), die Fahrzeugdynamik, Fahreraktivität oder/und Fahrwegvorhersage aufweisen;
Erkennen, mittels des Überholvorgang-Erkennungssystems (120), das eine Vielzahl von Sensoren aufweist, und unter Verwendung dieser Sensoren, einer Überholabsicht eines Fahrers basierend auf der Erfassung der Fahrcharakteristika des Host-Fahrzeugs, und wenn die Überholabsicht des Host-Fahrzeugs bestimmt ist, wird Gegenverkehr auf der Gegenfahrbahn mittels des Frontsensorsystems erfasst;
Analysieren, mittels des Überholentscheidungssystems (130), der Sensordaten mittels des Frontsensorsystems (110, 130) und des Überholvorgang-Erkennungssystems (120), und Ausgeben eines Signals an die Mensch-Maschine-Schnittstelle (140) oder eine zentrale Schaltung, das dem Fahrer das Überholen erlaubt oder untersagt,
Erlauben, mittels des Überholentscheidungssystems (130), dass das Host-Fahrzeug (200) überholt, wenn kein entgegenkommendes drittes Fahrzeug (203) durch das Frontsensorsystem (101) erfasst wird,
Erfassen, mittels des Frontsensorsystems (110, 130), eines dritten Längsabstands zwischen einem vierten Fahrzeug (204) und dem zweiten Fahrzeug (202) und einer Längsgeschwindigkeit zwischen dem vierten Fahrzeug (204) und dem zweiten Fahrzeug (202);
Erlauben, mittels des Überholentscheidungssystems (130), das dazu ausgebildet ist, Überholen zu erlauben, dass das Host-Fahrzeug (200) überholt, wenn der dritte Längsabstand über einem dritten Schwellenwert liegt und wenn die Längsgeschwindigkeit über einem vierten Schwellenwert liegt.

8. Computerprogrammprodukt zum Erlauben oder Untersagen eines Überholmanövers eines Host-Fahrzeugs (200) auf einer Straße mit mindestens einer Fahrspur, die Gegenverkehr und Überholverkehr zulässt, das, wenn es von einem Prozessor eines Fahrzeugs (200) ausgeführt wird, dazu ausgebildet ist, das Host-Fahrzeug (200) anzuweisen, die Verfahrensschritte gemäß Anspruch 7 durchzuführen, einschließlich:
Erfassen, mittels eines Frontsensorsystems (110, 130), einer seitlichen Geschwindigkeit zwischen einem ersten Fahrzeug (201) und einem zweiten Fahrzeug (202);
Erfassen, mittels des Frontsensorsystems (110, 130), eines ersten Längsabstands zwischen dem ersten Fahrzeug (201) und dem Host-Fahrzeug (200) und eines zweiten Längsabstands zwischen einem dritten Fahrzeug (203) und dem Host-Fahrzeug (200);
Erlauben oder Untersagen des Überholmanövers basierend auf der seitlichen Geschwindigkeit und dem ersten und dem zweiten Längsabstand.

9. Computerlesbares Medium, auf dem ein Computerprogramm nach Anspruch 8 gespeichert ist.

## Revendications

1. Système d'aide au dépassement (100) conçu pour être placé à bord d'un véhicule hôte afin d'autoriser ou d'interdire une manœuvre de dépassement dudit véhicule hôte (200) sur une route comportant au moins une voie de circulation en sens inverse permettant la circulation en sens inverse et la circulation en dépassement, le système comprenant :
un système de capteurs avant (110), comprenant des capteurs (101, 102) et configuré pour acquérir des données de capteurs relatives à un premier véhicule (201), un deuxième véhicule (202), un troisième véhicule (203) et un quatrième véhicule (204) ;
le deuxième véhicule (202) se déplaçant devant le véhicule hôte (200), le premier véhicule (201) se déplaçant devant le deuxième véhicule (202) et le quatrième véhicule (204) se déplaçant devant le premier véhicule (201), et le troisième véhicule (203) étant un véhicule circulant en sens inverse qui se déplace dans le sens opposé au véhicule hôte et qui est le véhicule, parmi la circulation en sens inverse, le plus proche du véhicule hôte ;
un système d'identification de dépassement (120), le système d'identification de dépassement (120) comprenant une pluralité de capteurs et utilisant lesdits capteurs, étant configuré pour identifier une intention de dépassement d'un conducteur du véhicule hôte sur la base de la détection des caractéristiques de conduite du véhicule hôte et, lorsque l'intention de dépassement du véhicule hôte est déterminée, la circulation en sens inverse sur la voie de circulation en sens inverse étant détectée au moyen du système de capteurs avant, les caractéristiques de conduite comprenant une dynamique du véhicule, une activité du conducteur et/ou une prédiction de la trajectoire de conduite ;
un système de prise de décision de dépassement (130), qui est connecté aux capteurs (101, 102) du système de capteurs avant (110) et
une interface homme-machine (140) ;
le système de prise de décision de dépassement (130) étant configuré pour analyser les données de capteurs au moyen du système de capteurs avant (110) et du système d'identification de dépassement (120), et pour émettre un signal vers l'interface homme-machine (140) qui autorise ou interdit au conducteur du véhicule hôte de dépasser,
le système de capteurs avant (110) étant configuré pour mesurer une première vitesse latérale entre le premier véhicule (201) et le deuxième véhicule (202) ;
le système de capteurs avant (110) étant configuré pour mesurer une première distance longitudinale entre le premier véhicule (201) et le véhicule hôte (200), et une deuxième distance longitudinale entre un troisième véhicule (203) et le véhicule hôte (200) ;
le système de capteurs avant (110, 130) étant configuré pour détecter une troisième distance longitudinale entre un quatrième véhicule (204) et le deuxième véhicule (202), et une deuxième vitesse longitudinale entre le quatrième véhicule (204) et le deuxième véhicule (202) ; le système de capteurs avant (110) étant configuré pour détecter un signal de changement de direction du premier véhicule (201) indiquant un dépassement,
le système de prise de décision de dépassement (130) étant configuré pour autoriser le véhicule hôte (200) à dépasser, si la vitesse latérale entre le premier véhicule (201) et le deuxième véhicule (202) est supérieure à un premier seuil, et si la première distance longitudinale est inférieure à la deuxième distance longitudinale et si la troisième distance longitudinale est supérieure à un troisième seuil, et si la deuxième vitesse longitudinale entre le quatrième véhicule (204) est supérieure à un quatrième seuil et si le signal de changement de direction du premier véhicule (201) indique un dépassement du premier véhicule (201), dans la mesure où un espace ou intervalle peut être éventuellement créé pour permettre au véhicule hôte de se rabattre après son dépassement.

2. Système d'aide au dépassement (100) selon la revendication 1,
le système de capteurs avant (110, 130) comprenant un radar (102), configuré pour mesurer des données de capteurs afin de déterminer la première distance longitudinale entre le premier véhicule (201) et le véhicule hôte (200), et une deuxième distance longitudinale entre le troisième véhicule (203) et le véhicule hôte (200).

3. Système d'aide au dépassement (100) selon la revendication 1 ou 2,
le système de capteurs avant (110, 130) comprenant un système de caméras avant (101), configuré pour mesurer des données de capteurs afin d'estimer la vitesse latérale entre le premier véhicule (201) et le deuxième véhicule (202) à partir des données de capteurs acquises.

4. Système d'aide au dépassement (100) selon l'une des revendications précédentes,
le système de prise de décision de dépassement (130) étant configuré pour autoriser le véhicule hôte (200) à dépasser, si le signal de changement de direction du premier véhicule (201) indique un dépassement du premier véhicule (201).

5. Système d'aide au dépassement (100) selon l'une des revendications précédentes,
le système de capteurs avant (110, 130) étant configuré pour détecter une première distance latérale entre le premier véhicule (201) et le deuxième véhicule (202) ;
le système de prise de décision de dépassement (130) étant configuré pour autoriser le véhicule hôte (200) à dépasser, si la première distance latérale est supérieure à un deuxième seuil.

6. Véhicule (200) comprenant un système d'aide au dépassement (100) selon l'une des revendications précédentes.

7. Procédé (300) pour autoriser ou interdire une manœuvre de dépassement d'un véhicule hôte (200) sur une route comportant au moins une voie de circulation en sens inverse permettant la circulation en sens inverse et la circulation en dépassement, le procédé (300) comprenant les étapes suivantes :
détection (303), au moyen d'un système de capteurs avant (110, 130), d'une vitesse latérale entre un premier véhicule (201) et un deuxième véhicule (202), le deuxième véhicule (202) se déplaçant devant le véhicule hôte (200) et le premier véhicule (201) se déplaçant devant le deuxième véhicule (202), détection en outre d'un troisième véhicule (203) et d'un quatrième véhicule (204), le quatrième véhicule (204) se déplaçant devant le premier véhicule (201) et le troisième véhicule (203) étant un véhicule circulant en sens inverse ;
détection (304), au moyen du système de capteurs avant (110, 130), d'une première distance longitudinale entre le premier véhicule (201) et le véhicule hôte (200), et d'une deuxième distance longitudinale entre un troisième véhicule (203) et le véhicule hôte (200) ;
autorisation ou interdiction de la manœuvre de dépassement sur la base de la vitesse latérale et des première et deuxième distances longitudinales, le système de prise de décision de dépassement (130) étant configuré pour autoriser le véhicule hôte (200) à dépasser, si la vitesse latérale entre le premier véhicule (201) et le deuxième véhicule (202) est supérieure à un premier seuil, et si la première distance longitudinale est inférieure à la deuxième distance longitudinale et
détection, au moyen du système de capteurs avant (110, 130), d'un signal de changement de direction du premier véhicule (201) indiquant un dépassement, détection, au moyen d'un système d'identification de dépassement (120), des caractéristiques de conduite du véhicule hôte (200), qui comprennent une dynamique du véhicule, une activité du conducteur et/ou une prédiction de la trajectoire de conduite ;
identification, au moyen du système d'identification de dépassement (120) comprenant une pluralité de capteurs et utilisant lesdits capteurs, d'une intention de dépassement d'un conducteur sur la base de la détection des caractéristiques de conduite et, lorsque l'intention de dépassement du véhicule hôte est déterminée, la circulation en sens inverse sur la voie de circulation en sens inverse étant détectée au moyen du système de capteurs avant ;
analyse, au moyen du système de prise de décision de dépassement (130), des données de capteurs au moyen du système de capteurs avant (110, 130) et du système d'identification de dépassement (120), et émission d'un signal vers l'interface homme-machine (140) ou un circuit central qui autorise ou interdit au conducteur de dépasser,
autorisation, au moyen du système de prise de décision de dépassement (130), au véhicule hôte (200) de dépasser, si aucun troisième véhicule (203) circulant en sens inverse n'est détecté par le système de capteurs avant (101),
détection, au moyen du système de capteurs avant (110, 130), d'une troisième distance longitudinale entre un quatrième véhicule (204) et le deuxième véhicule (202), et d'une vitesse longitudinale entre le quatrième véhicule (204) et le deuxième véhicule (202) ;
autorisation, au moyen du système de prise de décision de dépassement (130), qui est configuré pour autoriser le dépassement, au véhicule hôte (200) de dépasser, si la troisième distance longitudinale est supérieure à un troisième seuil, et si la vitesse longitudinale est supérieure à un quatrième seuil.

8. Produit-programme d'ordinateur pour autoriser ou interdire une manœuvre de dépassement d'un véhicule hôte (200) sur une route comportant au moins une voie permettant la circulation en sens inverse et la circulation en dépassement, qui, lorsqu'il est exécuté par un processeur d'un véhicule (200), est conçu pour donner instruction au véhicule hôte (200) de réaliser les étapes du procédé selon la revendication 7, comportant les étapes suivantes :
détection, au moyen d'un système de capteurs avant (110, 130), d'une vitesse latérale entre un premier véhicule (201) et un deuxième véhicule (202) ;
détection, au moyen du système de capteurs avant (110, 130), d'une première distance longitudinale entre le premier véhicule (201) et le véhicule hôte (200), et d'une deuxième distance longitudinale entre un troisième véhicule (203) et le véhicule hôte (200) ;
autorisation ou interdiction de la manœuvre de dépassement sur la base de la vitesse latérale et des première et deuxième distances longitudinales.

9. Support lisible par ordinateur, dans lequel est stocké un programme d'ordinateur selon la revendication 8.
